# EUROPEAN PATENT APPLICATION

(11) **EP 4 645 191 A1**
(43) Date of publication of application: **05.11.2025**
(21) Application number: 23912022.3
(22) Date of filing: 25.12.2023
(51) Int. Cl.: G06Q 10/30

(54) **INFORMATION PROCESSING SYSTEM, INFORMATION PROCESSING METHOD, AND PROGRAM**

(30) Priority: 27.12.2022 JP 2022210020
(71) Applicant: Sekisui Chemical Co., Ltd., Osaka-shi, Osaka 530-8565 (JP)
(72) Inventor: SUYAMA NARITA Kotomi, Tsukuba-shi, Ibaraki 300-4292 (JP); MIKI, Nanami, Tsukuba-shi, Ibaraki 300-4292 (JP); SATOU, Kanetomo, Tsukuba-shi, Ibaraki 300-4292 (JP); SHINDO, Chikako, Tokyo 105-8566 (JP)
(74) Representative: Ter Meer Steinmeister & Partner
(86) International application number: PCT/JP2023/046311
(87) International publication number: WO 2024/143242

(57) **Abstract**

[Problem] To provide an information processing system and the like that make it possible to provide user-oriented information about product collection.

[Solution] One aspect of the present invention provides an information processing system. The information processing system comprises a processor that can execute a program to perform the following steps. A reception step for receiving a request from a user, the request being a request for collection method information about a collection method for a recycled resin product. An acquisition step for acquiring user information about the user that made the request. A presentation step for presenting the user with information about a collection method that has a prescribed relationship with the acquired user information as the collection method information.

## Description

### Technical Field

The present embodiment relates to an information processing system, an information processing method, and a program.

### Background

In recent years, technologies related to recycling have been developed in order to realize a sustainable society. For example, PTL 1 discloses a method and the like for tracking food packaging in order to ensure effective recycling.

### Citation List

### Patent Literature

[PTL 1]Japanese Unexamined Patent Application Publication (Translation of PCT Application) No. 2022-525992

### Summary

### Technical Problem

By the way, in establishing a recycling process, it is essential for users who consume products to cooperate by returning the products. However, if users are not familiar with the product collection, they may find it bothersome to find out the necessary information, which can hinder the product collection.

In view of the above circumstances, the present embodiment provides an information processing system and the like capable of providing user-directed information related to product collection.

### Solution to Problem

According to one aspect of the present embodiment, an information processing system is provided. The information processing system includes a processor configured to execute a program to execute steps including:
a reception step of receiving a request from a user, the request being a request for collection method information related to a collection method of collecting a recyclable plastic product;
an acquisition step of acquiring user information related to the user who made the request; and
a presentation step of presenting, to the user, information related to the collection method that has a predetermined relationship with the acquired user information as the collection method information.

According to the above-mentioned aspect, an information processing system and the like capable of providing user-directed information related to product collection are provided.

### Brief Description of Drawings

[FIG. 1] FIG. 1 is a diagram illustrating the overall configuration of an information processing system 100.
[FIG. 2] FIG. 2 is a diagram illustrating the hardware configuration of an information processing device 1.
[FIG. 3] FIG. 3 is a diagram illustrating the hardware configuration of a user terminal 6.
[FIG. 4] FIG. 4 is a functional block diagram illustrating the functions of the information processing device 1.
[FIG. 5] FIG. 5 is an activity diagram representing the flow of a registration process.
[FIG. 6] FIG. 6 is an example of a display screen displayed on the information processing device 1.
[FIG. 7] FIG. 7 is a diagram for representing an example of history information registered by the information processing device 1.
[FIG. 8] FIG. 8 is an activity diagram representing an example of the flow of a presentation process.
[FIG. 9] FIG. 9 illustrates an example of a collection location table.
[FIG. 10] FIG. 10 illustrates an example of collection method information displayed.
[FIG. 11] FIG. 11 illustrates an example of the collection location table.
[FIG. 12] FIG. 12 illustrates another example of the collection method information displayed.
[FIG. 13] FIG. 13 illustrates another example of the collection method information displayed.
[FIG. 14] FIG. 14 illustrates another example of the collection location table.
[FIG. 15] FIG. 15 illustrates another example of the collection method information displayed.

### Description of Embodiments

Hereinafter, the present embodiment will be described using the drawings. Various features described in the embodiment below can be combined with each other.

By the way, a program for implementing software described in the present embodiment may be provided on a non-transitory computer-readable recording medium, or it may be made available for download from an external server. Alternatively, it may be provided in a manner that allows the program to be run on an external computer, thereby implementing its functions on a client terminal (i.e., cloud computing).

In the present embodiment, the term "unit" may also include, for example, a combination of hardware resources implemented by circuits in a broad sense, as well as the information processing performed by software that may be specifically implemented by such hardware resources. Additionally, various types of information are handled in the present embodiment, and such information may be represented by physical values such as signal values indicating voltage or current, by high and low signal levels in a binary bit set consisting of 0s and 1s, or by quantum superposition (i.e., quantum bits), and communication and computation can be executed by circuits in a broad sense.

Furthermore, circuits in a broad sense refer to circuits implemented by appropriately combining at least circuits, circuitry, processors, memory, and the like. That is, they include application-specific integrated circuits (ASICs) and programmable logic devices (such as simple programmable logic devices (SPLDs), complex programmable logic devices (CPLDs) and field-programmable gate arrays (FPGAs)).

### 1. Hardware Configuration

This section describes the hardware configuration of an information processing system 100 according to the present embodiment.

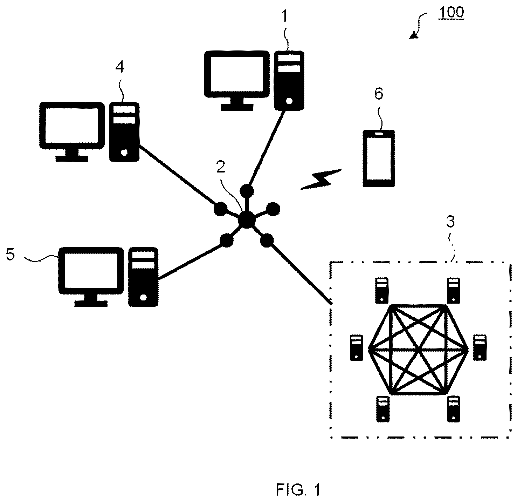

FIG. 1 is a diagram illustrating the overall configuration of the information processing system 100.

In the present embodiment, the information processing system 100 includes multiple information processing devices and a BC system 3 (BC = Blockchain; hereinafter sometimes simply referred to as "blockchain") that is capable of communicating with each of the information processing devices. In one example, the information processing system 100 includes a communication line 2, the BC system 3, an information processing device 1, an information processing device 4, an information processing device 5, and a user terminal 6. The communication line 2 includes the Internet and the like, and mediates the exchange of data between devices connected to the communication line 2. The BC system 3 manages various types of information in a distributed manner using the blockchain mechanism.

The BC system 3 includes multiple node devices connected to each other via a P2P (Peer-to-Peer) network. For example, the BC System 3 segments various types of transaction information into blocks of a predetermined capacity and sequentially links these blocks to generate a blockchain. The BC system 3 assigns the hash value of the previous block to each block and distributes the generated blockchain across multiple node devices for storage. The recording of transactions to the blockchain is executed by multiple node devices (which may also be referred to as "miners") connected to the P2P network. Note that the BC system 3 may be of any of the public, private, or consortium type. Also, the unit of data may be individual transactions, rather than blocks.

The information processing device 1 is a device owned by a business operator that conducts any of the steps of a process of recycling plastic products, and it is used for performing processing such as one related to collection method information described below. Likewise, the information processing devices 4 and 5 are also owned by business operators that conduct any of the steps of a process of recycling plastic products. In the present embodiment, the information processing device 4 is a device that is installed upstream (pre-step) of the information processing device 1 in the plastic product recycling process, and the information processing device 5 is a device installed downstream (post-step) of the information processing device 1 in the plastic product recycling process. The user terminal 6 is a terminal used by a user, who is the user of plastic products, in a recycling process of plastic products.

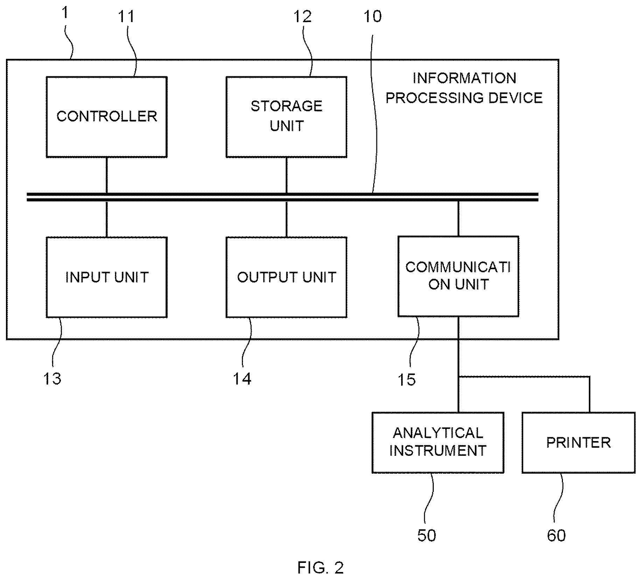

FIG. 2 is a diagram illustrating the hardware configuration of the information processing device 1. The information processing device 1 has a 11, a storage unit 12, an input unit 13, an output unit 14, and a communication unit 15, which are electrically connected by a communication bus 10. In FIG. 2, the communication unit 15 of the information processing device 1 is depicted as being connected to an analytical instrument 50 and a printer 60. Hereinafter, each unit of the information processing device 1 will be described.

### (Controller 11)

The controller 11 is a processor, such as a central processing unit (CPU), which is not illustrated. The controller 11 realizes various functions pertaining to the information processing device 1 by reading a predetermined program stored in the storage unit 12. That is, the information processing performed by the software stored in the storage unit 12 is specifically realized by the controller 11, which is an example of hardware, allowing it to be executed as each functional unit included in the controller 11. These will be described in more detail in the following section. Note that the controller 11 is not limited to a single unit, and may be implemented with multiple controllers 11 for the individual functions. A combination of the above is also acceptable.

### (Storage Unit 12)

The storage unit 12 stores various types of information defined by the foregoing description. For example, this may be implemented as a storage device such as a solid-state drive (SSD) that stores various programs pertaining to the information processing device 1 that are executed by the controller 11, or as a memory such as random access memory (RAM) that stores temporarily required information (such as arguments and arrays) pertaining to the program operations. The storage unit 12 stores various programs pertaining to the information processing device 1 that are executed by the controller 11, as well as variables and other similar information.

### (Input Unit 13)

The input unit 13 may be included in the housing of the information processing device 1, or it may be externally attached. For example, the input unit 13 may be implemented as a touchscreen integrated with the output unit 14. If it is a touchscreen, the user can input operations such as tapping, swiping, and the like. Of course, instead of a touchscreen, devices such as switch buttons, a mouse, or a QWERTY keyboard may be adopted. Additionally, audio input may be received via a microphone. That is, the input unit 13 receives operation inputs made by the user. These inputs are transferred as command signals via the communication bus 10 to the controller 11, and the controller 11 may perform predetermined control or computation as needed.

### (Output Unit 14)

The output unit 14 may, for example, be included in the housing of the information processing device 1, or it may be externally attached. The output unit 14 has devices such as a display (including a touchscreen) and a speaker, and it displays visual information generated to be user- perceivable, such as screens, images, icons, and text, on the display surface. It also outputs sound, including audio.

### (Communication Unit 15)

The communication unit 15 is configured to transmit various electrical signals from the information processing device 1 to external components. The communication unit 15 is also configured to receive various electrical signals from external components to the information processing device 1. Note that the communication unit 15 may have a network communication function, which enables communication of various types of information between the information processing device 1 and external devices via the communication line 2.

Note that the analytical instrument 50 and the printer 60 are connected to the information processing device 1 via the communication unit 15.

The analytical instrument 50 is an instrument capable of measuring the composition and the like of plastic products, and its specifications and the like can be appropriately selected according to the measurement target. The printer 60 is a device capable of issuing desired printed materials, and it is sufficient to adopt a known device. Typically, the printer 60 is an inkjet printer or a laser printer.

In addition, although not illustrated in the figures, the information processing device 1 may be equipped with a camera, scanner, reader, etc. which can read codes and the like. The camera, scanner, and reader may be included in the housing of the information processing device 1, or they may be externally attached.

Additionally, although not illustrated in the figures, the information processing devices 4 and 5 may also have the same hardware configuration as the aforementioned information processing device 1. Furthermore, the information processing devices 4 and 5 may also be equipped with the functions described in Section 2 below; however, repeated descriptions thereof will be omitted in the present specification.

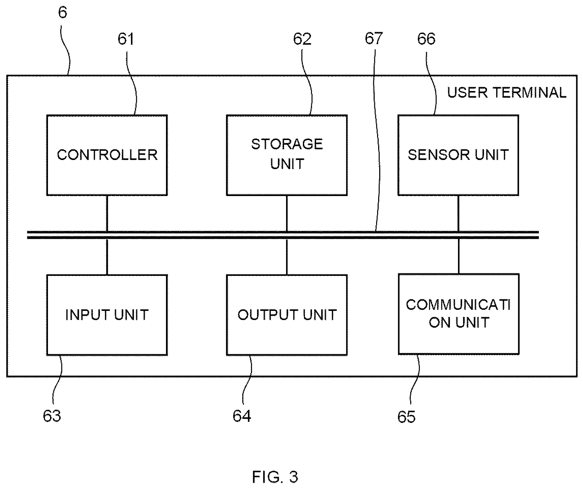

FIG. 3 is a diagram illustrating the hardware configuration of the user terminal 6. The user terminal 6 has a controller 61, a storage unit 62, an input unit 63, an output unit 64, a communication unit 65, and a sensor unit 66, which are electrically connected by a communication bus 67. The units from the controller 61 to the communication unit 65 are similar pieces of hardware with some performance differences from the units illustrated in FIG. 2. The sensor unit 66 has a sensor that measures a predetermined physical quantity. For example, it measures the location of the terminal using GPS (Global Positioning System). The sensor unit 66 outputs information indicating the measured location (e.g., latitude and longitude).

### 2. Functional Configuration

This section describes the functional configuration of the present embodiment.

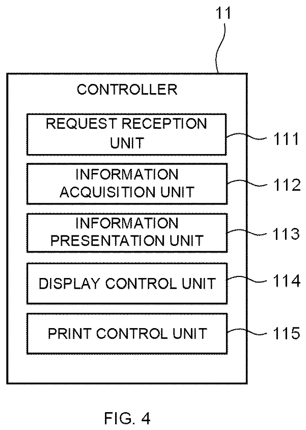

FIG. 4 is a functional block diagram illustrating the functions of the information processing device 1. As mentioned above, the information processing performed by the software (stored in the storage unit 12) is specifically realized by the hardware (the controller 11), allowing it to be executed as each functional unit included in the controller 11.

Specifically, the information processing device 1 (controller 11) includes the following functional units: a request reception unit 111, an information acquisition unit 112, an information presentation unit 113, a display control unit 114, and a 115.

### (Request Reception Unit 111)

The request reception unit 111 is an example of a reception unit that receives a request for collection method information related to a collection method of collecting a recyclable plastic product as a request from a user. The request reception unit 111 is configured to execute a reception step. In the reception step, the request reception unit 111 is configured to receive a request from a user via the communication unit 15 and the user terminal 6. The collection method information will be described in detail later.

### (Information Acquisition Unit 112)

The information acquisition unit 112 is an example of an acquisition unit that acquires user information related to the user who made the request received by the request reception unit 111. The information acquisition unit 112 is configured to execute an acquisition step. User information includes, for example, the user's name, address, and contact information, and is accumulated in the user terminal 6. In a first acquisition step, the information acquisition unit 112 acquires user information from the user terminal 6 via the communication unit 15.

### (Information Presentation Unit 113)

The information presentation unit 113 is an example of a presentation unit that presents the requested collection method information to the user. The information presentation unit 113 is configured to execute a presentation step. The information presentation unit 113 stores information to be presented to the user in advance, and, in the presentation step, it transmits the stored collection method information to the user terminal 6 via the communication unit 15, thereby presenting the transmitted collection method information to the user. Note that the presentation of the collection method information may be done using visually perceivable information, such as text, or, in addition to or instead of that, using audio or other forms of information.

### (Display Control Unit 114)

The display control unit 114 is configured to execute a display control step. In the display control step, the display control unit 114 causes various types of information stored in the storage unit 12, or screens including such information, to be displayed in a visually perceivable manner. Specifically, the display control unit 114 controls visual information such as screens, images, icons, and messages to be displayed on the output unit 14 of the information processing device 1. The display control unit 114 may generate only the rendering information for displaying the visual information on the information processing device 1.

### (Print Control Unit 115)

The print control unit 115 is configured to execute a print control step. In the print control step, the print control unit 115 controls the printer 60 connected to the information processing device 1 to print a predetermined printed material. Specifically, the print control unit 115 controls the printer 60 so that a code, such as one indicating access information specifying the access destination to the information processing device 1, is printed on a printed material.

### 3. Details of Information Processing

Section 3 describes an information processing method executed by the information processing system 100, with reference to activity diagrams and other figures. The information processing system is equipped with a processor configured to execute a program to execute the following steps.

### (Applicable Targets)

First, the applicable targets for the information processing device 1 of the present embodiment will be described. The information processing device 1 of the present embodiment is arranged in any of the steps of a process of recycling plastic products. The materials (resin materials) for these recyclable plastic products can be appropriately selected from among known resin materials. Examples of resin materials that are applicable targets for the information processing device 1 of the present embodiment include the following: olefin resins (polyolefin resins) such as polyethylene, polypropylene, polybutadiene, polyisoprene, and polyisobutylene; polyvinyl chloride; ABS resins; polyester resins such as polyethylene terephthalate (PET), polybutylene terephthalate (PBT), and polyethylene furanoate (PEF); polyamide resins; acrylic resins such as polymethyl methacrylate (PMMA); epoxy resins; rubbers such as ethylene propylene diene monomer (EPDM); polycarbonate resins; and polyurethane resins. The resin material may also be a so-called FRP (Fiber Reinforced Plastics), which is a composite material composed of the aforementioned resin components and fiber materials. Examples of such fiber materials here include, but are not limited to, carbon fibers, aramid fibers, glass fibers, and Zylon fibers. In the present specification, the term "resin material" shall be treated as a concept that includes processed products (plastic products) made from the various resins (resin materials) mentioned above. That is, applicable targets for the information processing device 1 of the present embodiment may include plastic products made from the aforementioned resins (resin materials), such as containers, packaging films, housings for electrical appliances, logistics materials, packaging materials, agricultural plastics, bottle caps, automotive supplies, pipes, wire coating materials, construction materials, tires, adhesives, tapes, and medical supplies.

### (Recycling Process)

The recycling process to which the information processing device 1 of the present embodiment is applicable is not particularly limited. For example, when the plastic product is a bottle formed from polyethylene, the following steps (S1) to (S5) are performed. After the final product, which has been remanufactured in step (S5), is used, the used bottle (plastic product) may simply be subjected to step (S1) again. Note that the recycling process of the present embodiment may be either chemical recycling or mechanical recycling. In addition, other steps (storage, transportation, and inspection) not mentioned below may be performed between the respective steps.

(S1) Segregate and discharge used plastic products. (S2) Collect and sort the plastic products. (S3) Melt the plastic products, remove impurities, and then pelletize them. (S4) Use the obtained pellets for molding to produce molded products. (S5) Treat the molded products as the final products.

These steps may be performed by a single entity, but preferably they are performed by two or more entities. The information processing device 1 of the present embodiment is preferable in the point that it facilitates traceability when the recycling process is performed by two or more entities, as mentioned above. Additionally, the overall picture of the recycling process is not limited to this; it can be appropriately set according to the types and characteristics of the intermediate products (separated plastic products, pellets, molded products, etc.) generated from the discharge of plastic products to remanufacturing.

Furthermore, the recycling process to which the information processing device 1 of the present embodiment is applicable may be the recycling process described in JP 2021-166499 A. Typically, the information processing device 1 of the present embodiment is applicable to a process of obtaining ethanol from syngas derived from waste containing resin materials, and using this ethanol to produce resin components. Ethanol is used as a raw material for the production of various organic compounds. Since ethanol has the same C₂ structure as ethylene, which accounts for approximately 60% of petrochemical products, it can be converted into ethylene monomer or butadiene monomer by existing chemical processes, and further used to produce organic chemical materials such as plastics. For example, ethanol can be used as a raw material for the production of butadiene, ethylene, propylene, isobutene, acetaldehyde, acetic acid, ethyl acetate, methyl (meth)acrylate, ethyl tert-butyl ether and ethylene glycol, ester compositions, polyester, acrylic acid, aminohexanoic acid, diethyl carbonate, polyethylene (PE), polyethylene terephthalate (PET), polypropylene (PP), polyisobutylene, polymethyl methacrylate (PMMA), ethylene propylene diene monomer (EPDM), polybutylene terephthalate (PBT), polyethylene furanoate (PEF), and polyurethane (PU). That is, the resin materials in the present embodiment may be any of the aforementioned compounds or their derivatives.

Note that the term "waste" mentioned above can be either household waste, commonly referred to as municipal solid waste (MSW), or business-related waste, also known as industrial solid waste (ISW).

To obtain ethanol from waste, for example, the step of processing waste at an incineration facility equipped with a gasification furnace is executed. The gasification furnace is a furnace capable of decomposing waste into molecular-level substances (e.g., gases including carbon monoxide and hydrogen) by partially combusting the waste in low-oxygen conditions. If the incineration facility has a gas purifier, it can remove and refine the impurity gases contained in the gas converted by the gasification furnace to extract the required gases (e.g., carbon monoxide gas and hydrogen gas).

Next, the obtained gas is fed into an ethanol production device. The ethanol production device is a device capable of producing ethanol using the obtained gas. Here, the ethanol production is carried out, for example, by applying the obtained gas to a metal catalyst or microorganism.

The metal catalyst may be a catalyst used for the synthesis of oxygenates, for example. The catalyst for the synthesis of oxygenates contains component A (rhodium), component B (manganese), component C (alkali metals), and component D. Component D includes component D1, component D2, or component D3. Component D1 includes one or more elements selected from the group consisting of titanium, vanadium, and chromium. Component D2 is an element belonging to group 13 of the periodic table. Component D3 includes one or more elements selected from the group consisting of magnesium and lanthanides. By containing components A to D, A to D1, A to D2, or A to D3, oxygenates can be efficiently synthesized.

Microorganisms include Butyribacterium methylotrophicum (Grethlein et al., 1990; and Jain et al., 1994b), Clostridium ragsdalei (Huhnke et al., 2008), Clostridium carboxidivorans (Liou, et al., 2005), Moorella species HUC22-1 (Inokuma, et al., 2007), Clostridium autoethanogenum (Abrini et al., 1994), and Clostridium ljungdahlii (Arora et al, 1995; Barik et al., 1988; Barik et al. 1990; and Tanner et al., 1993).

After the production of ethanol, it may be purified using known purification methods as appropriate. Additionally, the obtained ethanol may be converted to resin using known synthesis methods.

### (Flow of Information Processing)

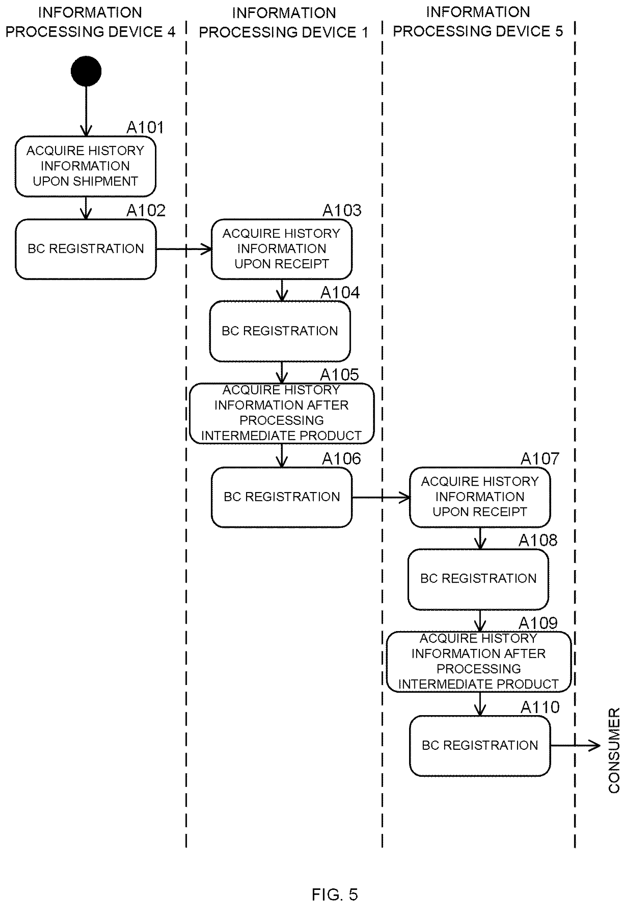

The flow of information processing performed by the information processing device 1 of the present embodiment and the like will be described using the following figures. In FIG. 5, the registration process in which history information is registered in the BC system 3 is first described. The details of the history information will be described thereafter.

FIG. 5 is an activity diagram representing the flow of a registration process. As mentioned above, the information processing system 100 of the present embodiment may include the information processing devices 4 and 5 in addition to the information processing device 1. Hereinafter, the flow of the registration process will be described, assuming that different entities own the information processing devices 1, 4, and 5.

First, the upstream entity that owns the information processing device 4 acquires history information regarding the intermediate products it has handled and registers the content thereof in the BC system 3 (activities A101-A102). History information refers to information indicating the steps through which the intermediate product has passed up to this point, the business operators who performed the respective steps, and changes in its composition. The history information also includes the number of times the intermediate product has been recycled (recycling count). The recycling count indicates the number of times the plastic product has passed through a collection location, and it is counted and registered as history information by any of the information processing devices (e.g., the most upstream information processing device 4) included in the information processing system 100.

Additionally, at this time, the above-mentioned entity obtains a code that indicates information for accessing the history information registered in the BC system 3 (hereinafter referred to as "access information"), and attaches this code to the intermediate product to be shipped. In detail, for example, a sticker or the like printed with the code (hereinafter referred to as a "code printed material") is affixed to the exterior or the like of the intermediate product, thereby attaching the code to the intermediate product.

Access information refers to information indicating, for example, the location where the registered content is stored in the BC system 3, as well as information indicating that there is access permission to the registered content. The code indicated on the code printed material can be set from among known codes, and it can be either a one-dimensional code or a two-dimensional code. Due to the large amount of information that can be managed, a two-dimensional code such as a QR code (registered trademark) is preferred. Note that the code printed material may be directly affixed to the intermediate product, or the code may be directly printed on the intermediate product. Additionally, instead of printing, the surface of the intermediate product may be processed to form a raised and/or recessed pattern that indicates the code. In any case, the code will be attached to the intermediate product. Since this flow is similar to activities A105-A106, which will be described later, the explanation is omitted here.

The entity that owns the information processing device 1 and has obtained the intermediate product from the upstream entity that owns the information processing device 4 first acquires the history information at the time of receipt and registers it in the BC system 3 (activities A103-A104). The acquisition of this history information is performed, for example, via a display screen displayed on the information processing device 1.

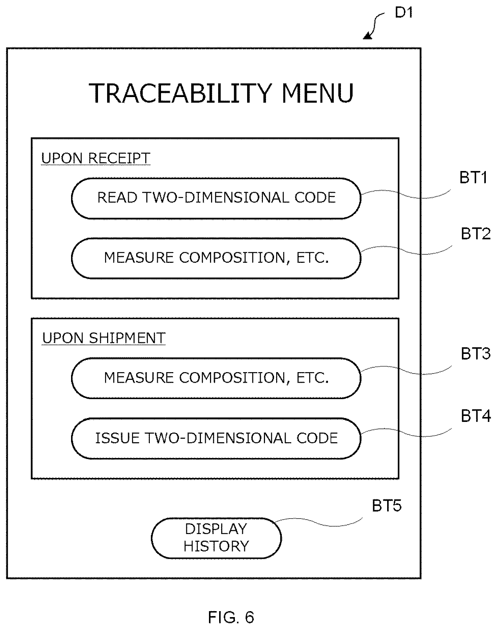

FIG. 6 illustrates an example of a display screen displayed on the information processing device 1. Display screen D1 illustrated in FIG. 6 is a screen displayed on the information processing device 1 by the display control unit 114. The entity that owns the information processing device 1 in contact with this screen can attempt to register the receipt of the intermediate product by pressing button BT1 through a click or equivalent operation. Typically, when this button BT1 is pressed, a camera or scanner provided in the information processing device 1 is activated, allowing the code attached to the exterior or the like of the intermediate product to be read.

That is, by reading the code, the information processing device 1 can manage the lot and similar information of the received intermediate product. Additionally, as an inspection at the time of receipt, pressing button BT2 allows for measurement of the composition and the like of the intermediate product. That is, pressing button BT2 on display screen D1 activates the analytical instrument 50 connected to the information processing device 1, enabling measurement of the composition and the like of the received intermediate product.

That is, the entity that owns the information processing device 1 measures the composition and the like of the intermediate product at the time of receipt using the analytical instrument 50, and registers it in the BC system 3, which enables the management of traceability, authenticity, and other similar factors at the time of receipt.

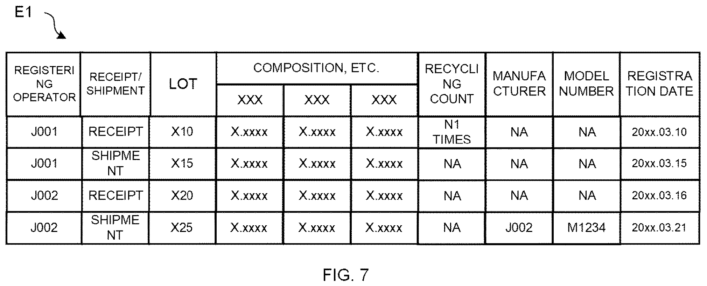

FIG. 7 is a diagram for representing an example of history information registered by the information processing device 1. The measured composition and the like of the intermediate product is associated with the registering operator (entity), the registration step (whether at the time of receipt or shipment), the lot, the recycling count ("N1" in the example illustrated in FIG. 7), and the registration date, and treated as part of the history information. The history information also includes the manufacturer (the entity "J002" in the example illustrated in FIG. 7) of the final product ultimately produced from the intermediate product, as well as the model number (the model number "M1234" in the example illustrated in FIG. 7) of that product.

Viewing of the history information thus registered may be accomplished by pressing button BT5 on display screen D1 illustrated in FIG. 6. That is, the display control unit 114 of the information processing device 1 may display a screen displaying the history information in response to a request from the user to display the history information.

The entity that owns the information processing device 1 and has registered the history information at the time of receipt as above performs the processing it is responsible for in the recycling process of the plastic product. After the processing, the entity again acquires the history information of the processed intermediate product and registers it in the BC system 3 (activities A105-A106).

This information processing is performed via display screen D1 illustrated in FIG. 6. That is, by pressing button BT3 displayed on the screen of the information processing device 1, the analytical instrument 50 can be activated. This allows for the measurement of the composition and the like of the processed intermediate product, which can then be registered in the BC system 3 as history information.

In addition to the aforementioned history information, in activity A106, the content of the processing performed by the entity that owns the information processing device 1 may also be registered in the BC system 3 as history information. This history information may include the conditions of the processing, the person in charge of the processing, time information regarding the processing, and the like.

Furthermore, after the registration in the BC system 3, the processed intermediate product is shipped to the entity that owns the downstream information processing device 5. In this case, button BT4 is pressed to issue a code printed material displaying a predetermined code. That is, by pressing button BT4 displayed on the screen of the information processing device 1, the print control unit 115 activates the printer 60 to issue a code printed material indicating access information for accessing the information registered in the BC system 3 regarding the processed intermediate product.

The entity that owns the information processing device 1 and has registered the history information in the BC system 3 ships the processed intermediate product to the entity that owns the information processing device 5. The entity that owns the recipient information processing device 5 then executes activities A107 to A110, which are the same as activities A103 to A106. In the example illustrated in FIG. 5, the intermediate product processed by the entity that owns the information processing device 5 ultimately becomes a plastic product, which is delivered to the user (the consumer who purchases the plastic product) through a retail store or the like (not illustrated).

A code indicating access information to the information registered by the information processing device 5 in the BC system 3 is affixed in A110 to the plastic product or the exterior of the plastic product. When disposing the plastic product, the user does so in a way that allows the entity that owns the information processing device 4 to collect it. Since the collected plastic product bears the affixed code, the entity that owns the information processing device 4 can verify the history information by reading the code. Accordingly, a recycling process with more reliable traceability is achieved.

A presentation process of presenting collection method information to the user will now be described.

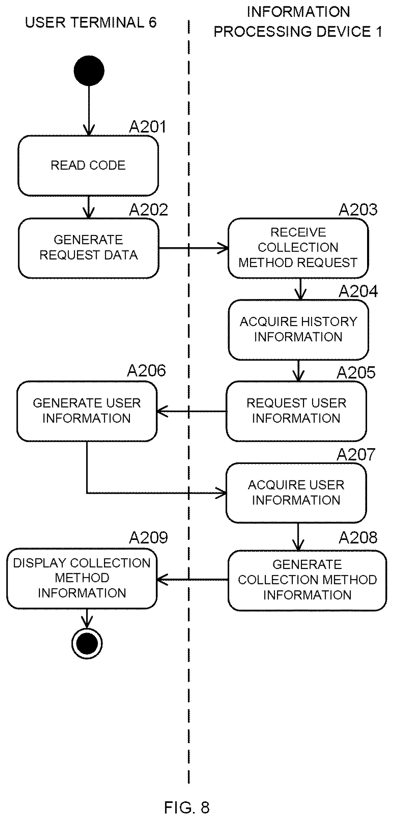

FIG. 8 is an activity diagram illustrating an example of the flow of the presentation process. First, the user terminal 6 is operated by the user to read the code attached to the plastic product purchased by the user (activity A201). Next, based on access information indicated by the read code, the user terminal 6 transmits request data requesting collection method information to the information processing device 1 (activity A202).

The information processing device 1, through the request reception unit 111, receives the request for collection method information based on the transmitted request data (activity A203). As mentioned above, the request reception unit 111 executes a reception step in response to the terminal (user terminal 6) owned by the user reading the code attached to the recyclable plastic product. According to this mode, it becomes possible to present collection method information when a recyclable plastic product is at hand.

Next, the information processing device 1, through the information acquisition unit 112, accesses the BC system 3 based on the access information indicated by the request data, and acquires the registered history information (activity A204). Next, the information acquisition unit 112 transmits, to the user terminal 6, request data indicating a request for user information of the user who has requested the collection method information (activity A205). The user terminal 6 generates user information indicated by the transmitted request data (activity A206).

The user terminal 6, in the present embodiment, generates information indicating the user location where the requesting user is located as user information. The user terminal 6, for example, measures its location measured by the sensor unit 66 and generates information indicating the measured location (e.g., information indicating latitude and longitude) as user information. The user terminal 6 transmits the generated user information to the information processing device 1. The information processing device 1, through the information acquisition unit 112, acquires the transmitted user information (activity A207).

Then, the information processing device 1, through the information presentation unit 113, generates collection method information based on the acquired user information (activity A208). Specifically, the information presentation unit 113 generates information related to a collection method that has a predetermined relationship with the user information acquired by the information acquisition unit 112 as collection method information. The information presentation unit 113, in the present embodiment, generates information indicating a collection location that has a predetermined relationship with the user location indicated by the acquired user information as collection method information. The user location indicated by this user information indicates the current location of the user, and will be referred to as the "current location" hereinafter.

The information presentation unit 113 extracts information on the manufacturer, model number, and manufacture date of the plastic product from the acquired history information, for example. For example, if the history information is as illustrated in FIG. 7, the information presentation unit 113 extracts information indicating that the manufacturer is "J002," the model number is "M1234," and the manufacture date is "March 21, 20xx."
Based on the information thus extracted, the information presentation unit 113 identifies collection locations where the plastic product can be collected.

As for the collection locations for plastic products, for example, multiple locations are available, such as retail stores of plastic products, refuse collection locations, and the facilities of recycling business operators. It is assumed that these collection locations have, depending on the location, restrictions on the manufacturers, model numbers, and manufacture dates of the products that can be collected. For example, retail stores may be eligible to collect products from manufacturers that they handle. Additionally, recycling business operators may only collect products of specific manufacturers and model numbers that are eligible for buyback. The information presentation unit 113 stores a collection location table in advance, in which each collection location is associated with products that can be collected there.

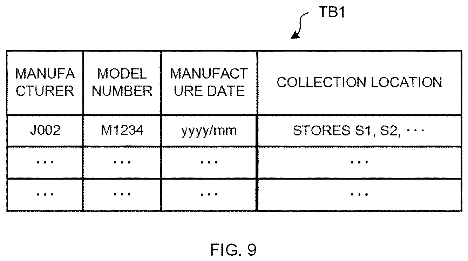

FIG. 9 is an example of a collection location table. In the example illustrated in FIG. 9, a collection location table TB1 is illustrated, in which manufacturers, model numbers, manufacture dates, and collection locations are associated. For example, a plastic product with the manufacturer "J002," the model number "M1234," and the manufacture date "mm/yyyy" is associated with the collection locations "Stores S1, S2, ..."
The information presentation unit 113 identifies, as collection locations where plastic products to which the code printed material is attached can be collected, collection locations associated, in the collection location table TB1, with the extracted final product, product model, and manufacture date.

The information presentation unit 113 then generates information indicating, for example, the collection location closest to the user's current location among the identified collection locations, as collection method information indicating a collection location that has a predetermined relationship with the user location indicated by the user information. The information presentation unit 113 also generates map information of the area including the route from the user's current location to the closest collection location as collection method information. The information presentation unit 113 transmits the generated collection method information to the user terminal 6. The user terminal 6 displays the transmitted collection method information (activity A209).

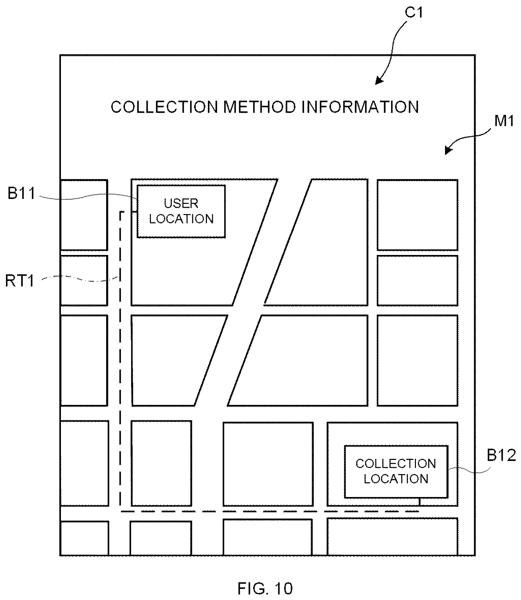

FIG. 10 illustrates an example of the collection method information displayed. In the example illustrated in FIG. 10, the user terminal 6 displays collection method information C1, which indicates a map M1 including a user location B11, a collection location B2, and a route RT1 from the user location B11 to a collection location B12. When the user moves, the user terminal 6 may display the collection method information C1, which indicates the updated current location on the map M1, using a process similar to that of so-called map applications. This allows the user to be informed of the remaining route to the collection location B12.

As described above, in the information processing device 1, the request reception unit 111 receives a request for collection method information related to a collection method of collecting a recyclable plastic product as a request from a user. Additionally, the information acquisition unit 112 acquires user information related to the user who made the request received by the request reception unit 111. Furthermore, the information presentation unit 113 presents information related to a collection method that has a predetermined relationship with the user information acquired by the information acquisition unit 112 as collection method information to the user. According to this mode, it becomes possible to present a useful collection method, such as the collection location B1 closest to the user location B11 and the route RT1 to it, as indicated by the collection method information C1 in FIG. 10.

Additionally, in the present embodiment, the collection method information refers to information indicating a collection location with a predetermined positional relationship with the user location (in the above example, the collection location closest to the user location). According to this mode, it becomes possible to reduce the time and effort required to check the collection location. Note that the predetermined positional relationship is not limited to the above relationship. For example, the predetermined positional relationship includes the following: positional relationships that are within a predetermined order of proximity from the user's current location; positional relationships within a predetermined distance from the user's current location; or positional relationships reachable within a specified walking time from the user's current location.

Additionally, the user location in the above-described example has been the location of the user terminal as measured by the user terminal, but it is not limited to this. For example, the user's address registered in advance may be used as the user location. Furthermore, the collection method information is not limited to the collection method information C1 illustrated in FIG. 8. The collection method information may be, for example, a map of the area around the collection location B12 (which may not necessarily include the user's current location), a map without the route RT1, information on the address and contact information of the collection location B12 instead of a map, or information on the direction and distance from the user location B11 to the collection location B12. In any case, it is possible to reduce the time and effort required to check the collection location.

### 4. Modifications

Section 4 describes modifications of the information processing method of the above-described information processing device 1 and the like.

The user information and collection method information are not limited to those descried above. The information acquisition unit 112 may acquire, as user information, time information indicating a request time at which a request for collection method information was made. In this case, the user terminal 6 generates time information indicating a time at which request data transmitted from the information processing device 1 was received, and transmits it to the information processing device 1. The information acquisition unit 112 acquires the transmitted time information as user information (activity A207). The information presentation unit 113 generates information indicating a collection time slot that has a predetermined relationship with the request time indicated by the acquired user information as collection method information, and presents it to the user (activity A208).

A collection time slot refers to a time slot during which plastic products can be collected. For example, at a certain store, the collection time slot corresponds to the store's business hours during which the store is open. In other words, the collection time slot may vary depending on the day, and there may be two or more time slots within a single day. Even when no one is present at the collection location, it is possible to provide a collection location where plastic products can be collected 24 hours a day, 365 days a year, by installing collection boxes or the like.

As in the embodiment, the information presentation unit 113 extracts information on the manufacturer, model number, and manufacture date of the plastic product from the acquired history information. Based on the extracted information, the information presentation unit 113 identifies collection locations and collection time slots where the plastic product can be collected. The information presentation unit 113 stores a collection location table in advance, in which each collection location is associated with the products that can be collected there and the corresponding collection time slot(s).

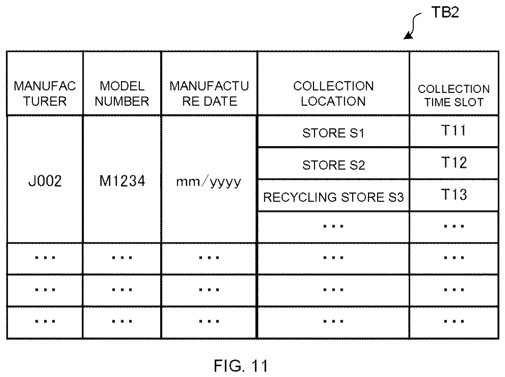

FIG. 11 illustrates an example of a collection location table. In the example illustrated in FIG. 11, a collection location table TB2 is illustrated, in which manufacturers, model numbers, manufacture dates, collection locations, and collection time slots are associated. For example, a plastic product with the manufacturer "J002," the model number "M1234," and the manufacture date "mm/yyyy" is associated with the collection locations "Store S1," "Store S2," and "Recycling Store S3," as well as the collection time slots "T11," "T12," and "T13," respectively.

The information presentation unit 113 identifies, as collection locations and collection time slots where plastic products to which the code is attached can be collected, collection locations and collection time slots that are associated, in the collection location table TB2, with the extracted manufacturer, model number, and manufacture date. The information presentation unit 113 then extracts, for example, a predetermined number of collection locations from those closest to the user's current location among the identified collection locations and collection time slots, and generates information indicating, among the extracted collection locations, one or more collection locations whose collection time slots include the current date and time as collection method information. The collection method information thus generated is an example of information indicating a collection time slot that has a predetermined relationship with the request time indicated by the user information. The information presentation unit 113 transmits the generated collection method information to the user terminal 6. The user terminal 6 displays the transmitted collection method information (activity A209).

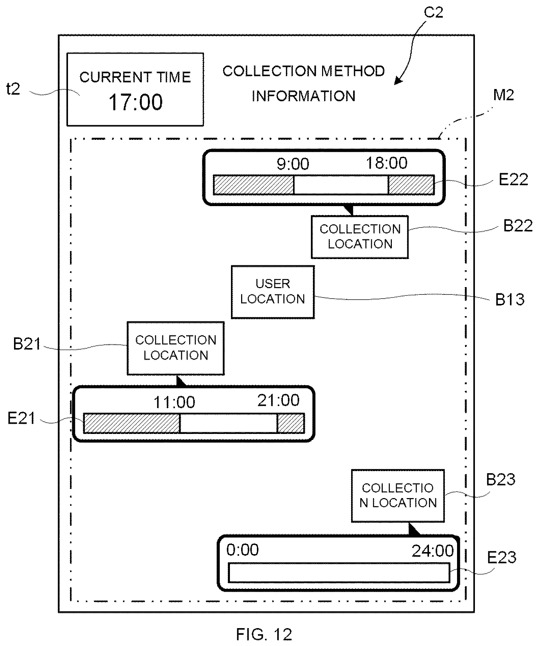

FIG. 12 illustrates another example of the collection method information displayed. In the example illustrated in FIG. 12, the user terminal 6 displays collection method information C2, which indicates a map M2 including a request time t2, a user location B13, collection locations B21, B22, and B23, and collection time slots E21, E22, and E23. The map M2 is outlined with a two-dot chain line along its outer perimeter, and roads, sections, and the like are omitted to enhance clarity. The request time t2 is the time at which the request for collection method information was made, and since only a short period of time elapses between the making of the request and the presentation of the collection method information, it is almost identical to the current time.

Each collection time slot is displayed with its corresponding collection location. In the example illustrated in FIG. 12, collection locations and collection time slots are associated by displaying the collection time slots in callouts originating from the collection locations. The distances from the user location B13 increase in the order of B22 < B21 < B23. In the example illustrated in FIG. 12, the request time t2 is "17:00."
The collection time slot E21 is the time slot from "11:00" to "21:00."
The collection time slot E22 is the time slot from "9:00" to "18:00," and the collection time slot E23 is the time slot from "0:00" to "24:00."

In this case, the collection location B22 is closest to the user location B13, but there is only one hour left until its collection time slot ends. Additionally, the collection location B23 allows 24-hour collection, but it is the farthest from the user location B13. The collection location B21 is farther than the collection location B22 and closer than the collection location B23, with four hours remaining until its collection time ends. Depending on the available travel time, the user can plan which collection location to use for returning items. According to this mode, it becomes easier for the user to plan a visit to a collection location according to the user's own schedule, compared to cases where no collection method information is presented.

In the above example, if the request time falls within the collection time slot, the information presentation unit 113 determines that the request time and the collection time slot have a predetermined relationship; however, the predetermined relationship is not limited to this. The information presentation unit 113 may also determine that the request time and the collection time slot have a predetermined relationship, for example, if the time at which the travel time to the collection location has elapsed since the request time (the expected time of arrival at the collection location) falls within the collection time slot. This allows the user to identify collection locations they can head to now to return plastic products, without needing to consider the travel time themselves.

For collection locations where the request time or the expected time of arrival at the collection location is past the current day's collection time slot, the information presentation unit 113 presents the collection time slot for the following day to the user along with the date information. This makes it easier for the user to decide whether to return items on the current day or the following day.

The user terminal 6 may be introduced with a scheduling app (app = application program) to manage the user's schedule, as in a scheduling app or a calendar app. In such cases, the information acquisition unit 112 may acquire schedule information indicating the user's schedule as user information. Schedule information refers to information indicating the content of activities the user has planned, along with the start and end times. In some cases, it may also include information indicating the activity location and details of the activity content.

In response to a request for user information from the information processing device 1, the user terminal 6 reads the user's schedule information from the scheduling app, and transmits it to the information processing device 1. The information acquisition unit 112 acquires the transmitted schedule information as user information (activity A207). The information presentation unit 113 generates information indicating a collection time slot that has a predetermined relationship with the schedule indicated by the acquired schedule information as collection method information, and presents it to the user (activity A208). The user terminal 6 displays the collection method information presented to the user (activity A209).

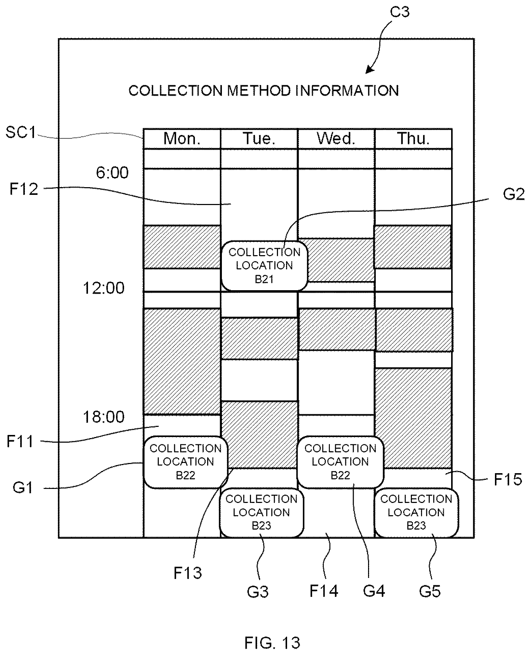

FIG. 13 illustrates another example of the collection method information displayed. In the example illustrated in FIG. 13, the user terminal 6 displays collection method information C3, which indicates the user's schedule SC1. In the schedule SC1, the user's scheduled activities are indicated in shaded areas, and available time slots F11, F12, F13, F14, and F15, where the user is free for a certain period of time or longer, are displayed. The information presentation unit 113 presents collection location images G1, G2, G3, G4, and G5 in the available time slots.

The collection location images G1, G2, G3, G4 and G5 are images indicating "collection location B22," "collection location B21," "collection location B23," "collection location B22," and "collection location B23," respectively, as collection locations where items can be collected during their respective available time slots. The information presentation unit 113 first sets a tentative sleep period (e.g., from 0:00 a.m. to 7:00 a.m.), and identifies collection locations whose collection time slots fall within the free time excluding the tentative sleep period. If only one collection location is identified, the information presentation unit 113 presents a collection location image indicating that collection location. The collection location image thus presented to the user is presented as collection method information indicating a collection time slot that has a predetermined relationship with the schedule indicated by the acquired schedule information, and the same shall apply hereinafter.

When two or more collection locations are identified, the information presentation unit 113 may present collection location images indicating all of the identified collection locations, or it may present a collection location image indicating a collection location selected from among these collection locations. For example, the information presentation unit 113 may present the collection location whose collection time slot has the longest duration of overlap with the available time slots as a collection location image. If multiple collection time slots have the same duration of overlap with the available time slots, the information presentation unit 113 may present one of the collection locations randomly selected as a collection location image.

When information indicating the user's current location is acquired as user information, if multiple collection time slots have the same duration of overlap with the available time slots, the information presentation unit 113 may present a collection location closest to the current location as a collection location image. In that case, the information presentation unit 113 may present a collection location closest to the location of a preceding or following scheduled activity, rather than the current location, as a collection location image. Additionally, when an operation to select a collection location image is performed, the information presentation unit 113 may present a map indicating the current location as well as the selected collection location, as illustrated in FIG. 10.

Furthermore, when an operation to select a collection location image is performed, the information presentation unit 113 may transmit request data to the user terminal 6, requesting that the scheduled activity to return the plastic product at the selected collection location be reflected in the scheduling app. In that case, the user terminal 6 executes a process of reflecting the planned activity indicated by the transmitted request data in the scheduling app. In any case, it is made easier for the user to plan the return of items, compared to cases where the above-mentioned collection method information is not presented to the user.

The collection method is not limited to those described above. For example, a so-called pickup may take place, in which a collection business operator visits the user's home to collect items.

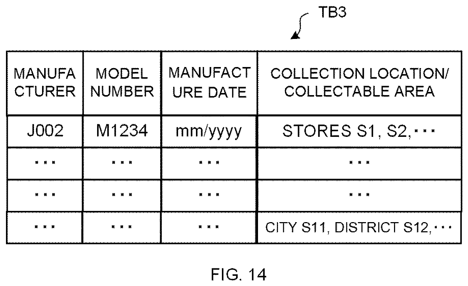

FIG. 14 illustrates another example of a collection location table. In the example illustrated in FIG. 14, a collection location table TB3 is illustrated, in which manufacturers, model numbers, manufacture dates, collection locations, and collectable areas are associated. A collectable area represents the region in which a pickup business operator can conduct pickups. In the example illustrated in FIG. 14, collectable areas are represented using administrative units for easier recognition, such as "City S11," "District S12," and the like.

The information presentation unit 113 identifies, as collection locations where plastic products to which the code printed material is attached can be collected, collection locations or collectable areas that are associated, in the collection location table TB3, with the extracted final product, product model, and manufacture date. The information presentation unit 113 then generates information indicating, for example, the collection location closest to the user's current location (user location) among the identified collection locations, or a collectable area including the user's current location as collection method information indicating a collection location that has a predetermined relationship with the user location. If the user location is within the collectable area, the user location is treated as a collection location.

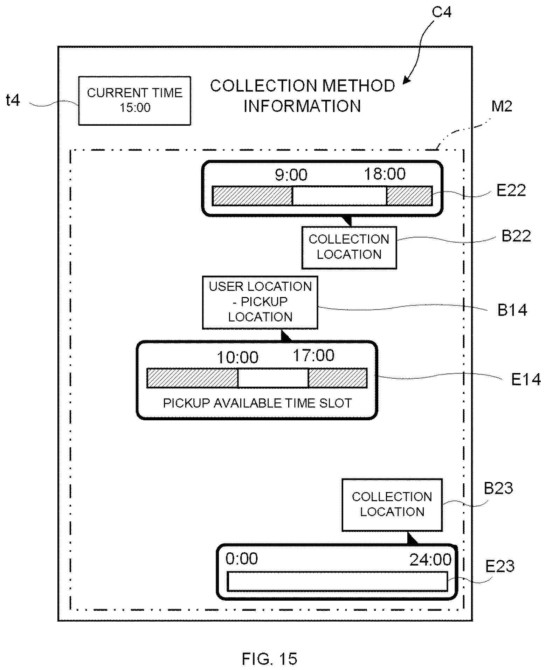

FIG. 15 illustrates another example of the collection method information displayed. In the example illustrated in FIG. 15, the user terminal 6 displays collection method information C4, which indicates the map M2 including a request time t4, a user location and pickup location B14, the collection locations B22 and B23, a pickup available time slot E14, and the collection time slots E22 and E23. The pickup available time slot E14 is a time slot during which plastic products can be picked up and collected.

As illustrated in FIG. 15, when the request time t4 falls within the pickup available time slot, for example, the information presentation unit 113 determines that the request time and the pickup available time slot have a predetermined relationship, and presents information including a pickup location (the user location and pickup location B14 in the example illustrated in FIG. 15) as collection method information. Additionally, the information presentation unit 113 presents information including the pickup available time slot (the pickup available time slot E14 in the example illustrated in FIG. 15) of a pickup location in which the request time t4 falls within its pickup available time slot as collection method information. According to this mode, it becomes possible to plan the return of items with pickup as one of the available options.

Note that the information presentation unit 113 may determine that the request time and the pickup available time slot have a predetermined relationship if, for example, the time at which the travel time from requesting a pickup at the request time until the pickup arrives has elapsed (the time at which the pickup business operator is expected to reach the current location, which is the collection location) falls within the pickup available time slot. According to this mode, it becomes possible to ensure that the pickup can be completed more reliably in time.

Additionally, in the collection method information indicating the user's schedule as illustrated in FIG. 13, if the pickup available time slot for a pickup available area that includes the user's current location overlaps with the user's available time slots, the information presentation unit 113 may set this overlapping time slot as the collection time slot, and present a collection location image indicating the user's location as a collection location (pickup location). This makes it easier for the user to plan the return of items, compared to cases where the collection method information is not presented to the user.

Although the preceding embodiment has been described as the configuration of the information processing device 1, an information processing method including steps executed by an information processing system may be provided. Additionally, a program that causes a computer to execute steps executed by an information processing system may be provided.

In the preceding embodiment, the mode has been described in which a two-dimensional code such as a QR code (registered trademark) is attached to the exterior or the like of intermediate products for shipment. Instead of this two-dimensional code, a one-dimensional code may be adopted, or an NFC (Near Field Communication) tag may be adopted. That is, a mode in which an NFC tag is attached to the exterior or the like of intermediate products for shipment, and the receiving entity reads the tag using an NFC reader is also possible.

In the preceding embodiment, each of the multiple entities acquires and registers the history information, but the acquisition and registration of the history information may be performed within a single entity. That is, the information processing system 100 of the present embodiment can also be constructed by placing each information processing device between factories or steps within a single entity.

The configuration illustrated in FIG. 1 and similar figures is one example, and other modes may be adopted as long as they are feasible. For example, a single device may be distributed across two or more devices, or it may be replaced by a cloud computing system. Additionally, the functions of a single device may be realized by being distributed across two or more devices, or the functions of two or more devices may be realized by being consolidated into a single device. Furthermore, the operations performed by a single function may be performed by being distributed across two or more functions, or two or more functions may be integrated into a single function. In short, as long as all the necessary functions of the information processing system 100 are realized, the configuration of the devices realizing those functions may be in any form.

The output destination of information or data (hereinafter referred to as "information, etc.") may be other devices, displays, storage units (including internal and external storage units), and the like. Acquisition of information, etc. includes not only the mode of acquiring information, etc. transmitted from other devices, but also the mode of acquiring information, etc. generated by the device itself. The tables in which parameters are associated are not limited to those illustrated, and the number of parameters may be decreased or increased as needed. Furthermore, information, etc. corresponding to parameters may be obtained using mathematical formulas or conditional expressions, without the use of a table.

### <Others>

Furthermore, the embodiment
may be provided in each of the following modes described below.
(1) An information processing system comprising: a processor configured to execute a program to perform steps including: a reception step of receiving a request from a user, the request being a request for collection method information related to a collection method of collecting a recyclable plastic product; an acquisition step of acquiring user information related to the user who made the request; and a presentation step of presenting, to the user, information related to the collection method that has a predetermined relationship with the acquired user information as the collection method information.
   According to this mode, it becomes possible to present a useful collection method.
(2) The information processing system according to (1), wherein: the user information is information indicating a user location where the user who made the request is located; and the collection method information is information indicating a collection location that has the relationship with the user location.
   According to this mode, it becomes possible to reduce the time and effort required to check the collection location.
(3) The information processing system according to (1) or (2), wherein: the user information is time information indicating a request time at which the request was made; and the collection method information is information indicating a collection time slot that has the relationship with the request time.
   According to this mode, it becomes easier to plan a visit to a collection location.
(4) The information processing system according to any one of (1) to (3), wherein: the user information is schedule information indicating a schedule of the user; and the collection method information is information indicating a collection time slot that has the relationship with the schedule.
   According to this mode, it becomes easier to plan the return of items.
(5) The information processing system according to any one of (1) to (4), wherein: the reception step is executed in response to a terminal owned by the user reading a code attached to the recyclable plastic product.
   According to this mode, it becomes possible to present a collection method when a recyclable plastic product is at hand.
(6) An information processing method comprising: the steps executed by the information processing system according to any one of (1) to (5).
(7) A program for causing a computer to execute the steps executed by the information processing system according to any one of (1) to (5).

Of course, the above are not the only possible modes of implementation.

Finally, although various embodiments of the present invention have been described, these are presented merely as examples and are not intended to limit the scope of the invention. The novel embodiments may be implemented in various other forms, and various omissions, substitutions, and modifications can be made without departing from the gist of the invention. Such embodiments and their modifications are included within the scope and gist of the invention, and also within the scope of the invention as defined in the claims and their equivalents.

### [Reference Signs List]

1: information processing device
2: communication line
3: BC System
4: information processing device
5: information processing device
6: user terminal
11: controller
50: analytical instrument
60: printer
61: controller
66: sensor unit
100: information processing system
111: request reception unit
112: information acquisition unit
113: information presentation unit
114: display control unit
115: print control unit

## Claims

1. An information processing system comprising:
a processor configured to execute a program to perform steps including:
a reception step of receiving a request from a user, the request being a request for collection method information related to a collection method of collecting a recyclable plastic product;
an acquisition step of acquiring user information related to the user who made the request; and
a presentation step of presenting, to the user, information related to the collection method that has a predetermined relationship with the acquired user information as the collection method information.

2. The information processing system according to claim 1, wherein:
the user information is information indicating a user location where the user who made the request is located; and
the collection method information is information indicating a collection location that has the relationship with the user location.

3. The information processing system according to claim 1 or claim 2, wherein:
the user information is time information indicating a request time at which the request was made; and
the collection method information is information indicating a collection time slot that has the relationship with the request time.

4. The information processing system according to any one of claims 1 to 3, wherein:
the user information is schedule information indicating a schedule of the user; and
the collection method information is information indicating a collection time slot that has the relationship with the schedule.

5. The information processing system according to any one of claims 1 to 4, wherein:
the reception step is executed in response to a terminal owned by the user reading a code attached to the recyclable plastic product.

6. An information processing method comprising:
the steps executed by the information processing system according to any one of claims 1 to 5.

7. A program for causing a computer to execute the steps executed by the information processing system according to any one of claims 1 to 5.
